Europäisches Patentamt

European Patent Office

Office européen des brevets

(11) Publication number: **0 054 043**
**B1**

## EUROPEAN PATENT SPECIFICATION

(45) Date of publication of patent specification: **06.11.85**

(21) Application number: **81901683.3**

(22) Date of filing: **19.06.81**

(86) International application number:
**PCT/AU81/00076**

(87) International publication number:
**WO 81/03604 24.12.81 Gazette 81/30**

(51) Int. Cl.⁴: **A 46 B 13/02**

(54) **ELECTRICALLY DRIVEN TOOTHBRUSH.**

(30) Priority: **19.06.80 AU 4103/80**

(43) Date of publication of application:
**23.06.82 Bulletin 82/25**

(45) Publication of the grant of the patent:
**06.11.85 Bulletin 85/45**

(84) Designated Contracting States:
**FR**

(73) Proprietor: **HUNTER, Frank Mitchell
Nunyara Medical Centre Church Street
Terrigal, N.S.W. 2260 (AU)**

(72) Inventor: **HUNTER, Frank Mitchell
Nunyara Medical Centre Church Street
Terrigal, N.S.W. 2260 (AU)**

(74) Representative: **Woodin, Anthony John et al
Fitzpatricks Kern House 61/62 Lincoln's Inn
Fields
London WC2B 6EX (GB)**

(56) References cited:
**WO-A-80/00529
AU-D-1 512 370
CA-A-1 068 853
FR-A- 953 255
FR-A-1 094 134
FR-A-2 131 067
GB-A- 990 989
GB-A-1 070 637
GB-A-1 352 794
GB-A-2 005 999
GB-A-2 029 926
GB-A-2 036 551
US-A-2 618 161**

(56) References cited:
**US-A-3 451 086
US-A-3 739 416
US-A-3 829 922
US-A-4 163 300
US-A-4 225 994**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention concerns electric toothbrushes.

### Background of the invention

Various theories regarding the care of teeth have from time to time held sway as to the correct mode and consequently methods of cleaning the teeth have evolved in order to practise the theory. For many years it has been recommended that a hand held brush should be used with a circular motion for efficient enamel cleaning, food removal and a gum massage. Recently such advice was thought to be a compromise between what was best and what adults and children could be expected to perform daily.

I have shown that a sweeping motion with brush bristles over the gum toward the teeth in a direction substantially perpendicular to the gum results in improved overall hygiene because the border between the gum and enamel is swept unidirectionally so as to seal the region of overlap instead of separating the gum from the enamel. Such a motion is difficult to carry out by hand moreover the direction of the sweep must be reversed between upper and lower teeth so as to preserve and promote the sealed attachment in the gingival sulcus between the gingiva and the cemento-enamel junction. The application of such sweeping motion requires both patience and persistence and is much more conveniently formed with a powered brush.

French Patent No. 953,255 discloses an electrically driven reciprocating mechanism for a toothbrush which imitates the sawing action of the wrist. Even if this action is supplemented by rotational motion of a helical brush the sum of the two movements still fails to clean teeth effectively.

The provision of a guard as in French Patent 1094134 or the introduction of reversible brush rotation as in U.S. 3235897, U.S. 3451086 and French Patent 2131067 enabled the direction of rotation of the brush to be changed in order to sweep the gum margin in the appropriate direction but still failed to provide a cleaning mode for the interproximal spaces.

### Summary of the invention

This invention provides an electrically driven toothbrush comprising a stationary handle part which supports an electric motor, a motor reversing means and a speed reducing means, a stem adapted to extend from the handle part, and a head at one end of the stem with a radial array of bristles which receive a continuous rotary drive until reversed by the reversing means, wherein there are provided a coupling drivable at a reduced speed, two interchangeable stems, each having a coupling end and a brush end, each coupling end being capable of connection to the coupling for transmitting drive to the brush end, one stem brush end having as aforesaid a radial array of bristles which receive a continuous rotary drive until reversed by the reversing means, the other stem brush end being rotatable relative to the stem about an axis extending at a substantial angle to the stem, and drive means driven through the stem from the coupling end for imparting an oscillating motion to said array whereby a combination of cleaning modes is available, characterised in that said other brush end has a substantially parallel array of bristles which extends parallel to said axis, and the speed reducing means is a gearbox driven by the motor, the gearbox being an epicyclic gearbox with a carrier plate which is rotatable at one speed and a coaxial sun gear shaft which revolves at another speed for any given motor speed, and said coupling providing selective releasable driving connections between said carrier plate and sun gear shaft and the coupling ends of said stems.

Preferably, the coupling end of the stem having a radial array of bristles is adapted to be drivably connected to said carrier plate and the coupling end of the stem having a substantially parallel array of bristles is adapted to be drivably connected to said sun gear shaft.

It is preferred that the carrier plate has a central splined aperture and the coaxial sun gear shaft has a splined end, the coupling end of one of said stems having a tubular socket with an outer surface provided with axial splines complementary to the aperture splines and a cavity which receives the splined end of the shaft but does not contact the shaft.

Preferably, the handle part has a stem supporting collar situated coaxially with the base of each aforesaid stem and one stem has a sleeve bearing situated adjacent the coupling end thereof, the outer surface of the sleeve bearing being a push fit within the collar.

In a further preferred form of the invention the carrier plate has a central splined aperture and the coaxial sun gear shaft has a splined end; the coupling end of one of said stems is a tube which is a push fit upon a collar extending from the handle part, and the drive means comprises a drive shaft supported for rotation in the stem, one end of which drive shaft has a socket with interior splines which are complementary to the splines on the sun gear shaft and the other end of which drive shaft has a pin and slot connection with the array for producing oscillating motion of the array. Preferably, the array is disposed at an obtuse angle to the stem and is mounted on a roller supported in a pair of bearings, the roller having an axial slot whereas the drive shaft has an eccentrically mounted pin which engages the slot.

In a preferred embodiment the handle part comprises a substantially tubular hollow casing, a stem supporting collar projecting from one end, entering electric power supply wires and components constituting a speed change circuit board located at the opposite end, the motor and speed reducing means being housed between the circuit board and the collar and a switch assembly located along the length of the casing.

## Description of the drawings

An embodiment of the invention with interchangeable stems is now described with reference to the drawings in which

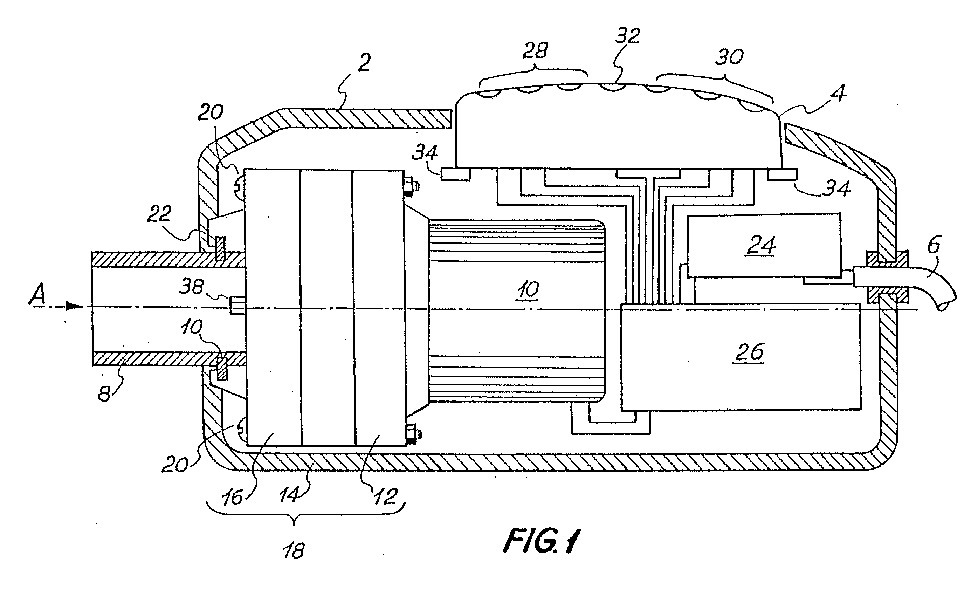

Figure 1 is a diagrammatic part sectional view of the handle part;

Figure 2 is a sectional side elevation of one form of stem and brush;

Figure 3 is a sectional side elevation of another form of stem;

Figure 4 is a view from direction A of the gearbox when removed from the handle part to show the manner of coupling the stems.

## Detailed description

The handle part consists of a moulded plastic casing 2 having a switch aperture for a switch assembly 4; a cable aperture for a power flex 6; a stem aperture for a brass collar 8. A 6 volt, 4.2 watt D.C. motor 10 drives three stages 12, 14, 16 of an epicyclic gearbox jointly indicated as 18. The stages of the gearbox are connected in axial alignment by bolts 20. The brass collar 8 extends into stage 16 of the gearbox and is positioned by circlip 22. The cable 6 supplies 12v AC current from a transformer pack (not shown) adapted to be plugged directly into a mains power point or receptacle. Circuit board 24 rectifies the current in a standard rectifier circuit. Circuit board 26 in conjunction with switch assembly 4 permits the user to select three forward speeds by operation of one of the bridge-contact switches of group 28 and three reverse speeds by operation of one of the switches of group 30. The motor is stopped and started with switch 32. These items are standard circuitry. Moulded ledges 34 support switch assembly 4.

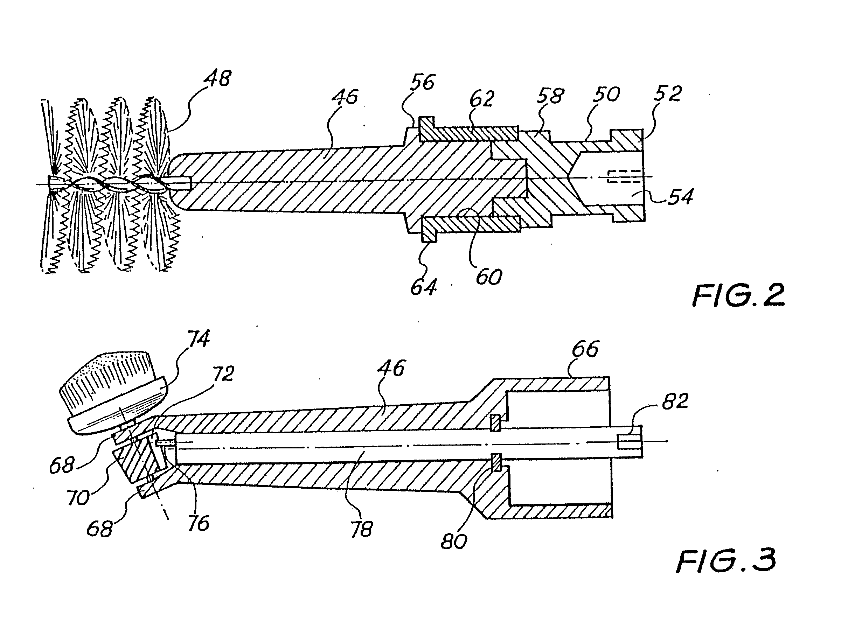

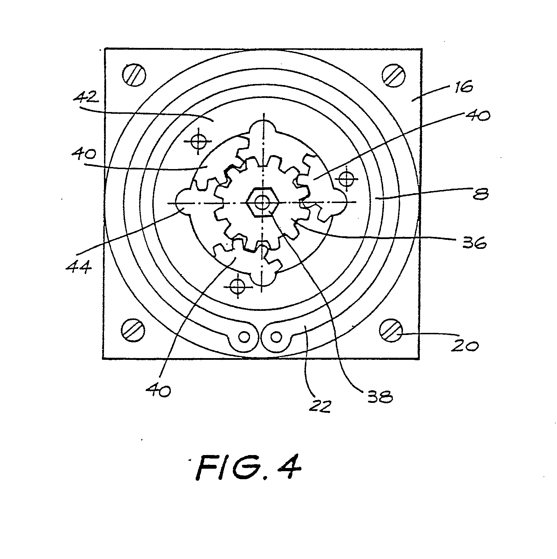

Each stage of the gearbox has a sun and planet gears with the planet gears driving a carrier plate which drives the input gear of the next stage in known manner. The third stage 16 is different because it must impart drive to both versions of the stem shown in Figures 2 and 3, at a ratio to suit the particular brush head selected by the user. Stage 12 achieves a step down of 6:1 and stage 14 likewise giving an overall reduction ratio of 36:1 corresponding to 440 rpm which is the speed of sun pinion 36 and hexagonal shaft 38 of Figure 4. Stage 16 is a step up stage of 1:4 which means that three planet pinions 40 and carrier plate 42 revolve faster at an overall reduction of 9:1. Carrier plate 42 has splines 44 which impart slow drive to the stem shown in Figure 2. The hexagonal shaft 3 imparts fast drive to the stem shown in Figure 3.

Referring now to Figure 2, the nylon stem 46 supports a spiral brush 48 at one end and at the opposite end is secured to a nylon socket 50 fitted with moulded splines 52 complementary to splines 44 on the carrier plate. Cavity 54 is of sufficiently large diameter to clear hexagonal shaft 38. The socket and stem together define a pair of opposed shoulders 56, 58 defining between them a bearing surface 60 surrounded by a brass flanged sleeve 62 the outer diameter of which is a push fit into the interior of collar 8 to an extent determined by flange 64. This limits the reach of socket 50 toward the carrier plate 42 while allowing the two to couple.

Referring now to Figure 3, the hollow stem 46 widens at one end into a tube 66 which is a push fit onto the outside of collar 8. The head end of the stem is shaped to form a pair of snap fit bearings 68 which support a tapered nylon roller 70 with an axial slot 72. Brush 74 lies at an obtuse angle to the axis of the stem. Oscillating motion is imparted to roller 70 by an eccentric metal pin 76 carried by drive shaft 78. The latter is retained in the stem by a clip 80. The end of the shaft 78 opposite the pin 74 is formed as a hexagonal socket 82 which couples with hexagonal shaft 38.

The following output speeds were measured under conditions of average load, the motor speeds being changed by the integrated circuit board 26 in response to finger operation of switch group 28.

| Motor rpm | Stem shaft rpm of radial brush | Stem shaft rpm of oscillating brush |
|---|---|---|
| 15840 | 440 | 1200 |
| 12600 | 350 | 1000 |
| 10800 | 300 | 750 |

While a toothbrush with both types of brush action has been described it is possible to construct versions suited to only one brush action. Thus an oscillating brush action requires no reversing switch.

A variety of interchangeable stems are available providing different bristle hardness, packing and length.

I have found the advantages of the above embodiment to be

1. The interproximal spaces are swept efficiently by the helical brush.

2. The buccal, labial, palatal and lingual tooth surfaces can all be swept in a direction which presses the gingiva onto those surfaces, at the same time massaging the gum area generally.

3. Equal cleaning of the right and left sets is possible whether the user is left or right handed.

4. As the dental and oral condition of users varies considerably, a speed range is of great assistance in offering both plaque control and gingival massage.

5. The speed selection helps considerably in overcoming the apprehension of which users experience in introducing into the mouth a fast, electrically driven instrument. Aged users particularly wish to start on as slow a speed as possible.

## Claims

1. An electrically driven toothbrush comprising a stationary handle part (2) which supports an electric motor (10), a motor reversing means (26, 4, 30) and a speed reducing means (18), a stem (46) adapted to extend from the handle part, and a *head at one end of the stem with a radial array* (48) of bristles which receive a continuous rotary drive until reversed by the reversing means, wherein there are provided a coupling (38, 44) drivable at a reduced speed, two interchangeable stems (4, 6), each having a coupling end (50, 52, 66, 82) and a brush end, each coupling end being capable of connection to the coupling (38, 44) for transmitting drive to the brush end, one stem brush end having as aforesaid a radial array (48) of bristles which receive a continuous rotary drive until reversed by the reversing means, the other stem brush end being rotatable relative to the stem (46) about an axis extending at a substantial angle to the stem, and drive means (78, 76, 70) driven through the stem (46) from the coupling end (66, 82) for imparting an oscillating motion to said array (74) whereby a combination of cleaning modes is available, characterised in that said other brush end has a substantially parallel array of bristles which extends parallel to said axis, and the speed reducing means is a gearbox (18) driven by the motor (10), the gearbox being an epicyclic gearbox with a carrier plate (42) which is rotatable at one speed and a coaxial sun gear shaft (38) which revolves at another speed for any given motor speed, and said coupling (38, 44) providing selective releasable driving connections between said carrier plate and sun gear shaft and the coupling ends of said stems.

2. An electrically driven toothbrush as claimed in claim 1, wherein the coupling end (50, 52) of the stem having a radial array (48) of bristles is adapted to be drivably connected to said carrier plate (42) and the coupling end (66, 82) of the stem having a substantially parallel array (74) of bristles is adapted to be drivably connected to said sun gear shaft (38).

3. An electrically driven toothbrush as claimed in claim 1 or 2, wherein the carrier plate (42) has a central splined aperture and the coaxial sun gear shaft (38) has a splined end; the coupling end (50) of one of said stems (46) having a tubular socket with an outer surface provided with axial splines (52) complementary to the aperture splines (44) and a cavity (54) which receives the splined end of the shaft (38) but does not contact the shaft.

4. An electrically driven toothbrush as claimed in claim 1, 2 or 3, wherein the handle part (2) has a stem supporting collar (8) situated coaxially with the base of each aforesaid stem (46) and one stem has a sleeve bearing (62) situated adjacent the coupling end thereof, the outer surface of the sleeve bearing being a push fit within the collar.

5. An electrically driven toothbrush as claimed in claim 1, 2, 3 or 4, wherein the carrier plate (42) has a central splined aperture and the coaxial sun gear shaft (38) has a splined end; the coupling end of one of said stems (46) is a tube (66) which is a push fit upon a collar (8) extending from the handle part, and the drive means comprises a drive shaft (78) supported for rotation in the stem, one end of which drive shaft has a socket (82) with interior splines which are complementary to the splines on the sun gear shaft (38) and the other *end of which drive shaft has a pin, and slot* connection (76, 72) with the array (74) for producing oscillating motion of the array (74).

6. An electrically driven toothbrush as claimed in claim 5, wherein the array (74) is disposed at an obtuse angle to the stem and is mounted on a roller (70) supported in a pair of bearings (68), the roller having an axial slot (72) whereas the drive shaft (78) has an eccentrically mounted pin (76) which engages the slot.

7. An electrically driven toothbrush as claimed in any one of the preceding claims, wherein the handle part comprises a substantially tubular hollow casing (2), a stem supporting collar (8) projecting from one end, entering electric power supply wires (6) and components constituting a speed change circuit board (26) located at the opposite end, the motor (10) and speed reducing means (18) being housed between the circuit board (26) and the collar (8) and a switch assembly (4) located along the length of the casing.

**Patentansprüche**

1. Elektrisch angetriebene Zahnbürste, bestehend aus einem festen Handgriff (2), der einen Elektromotor (10), Mittel für die Motorumsteuerung (26, 4, 30) und Mittel für die Drehzahluntersetzung (18) trägt, einen für die Verlängerung des Handgriffs eingerichteten Schaft (46) und einem Kopf auf einer Seite des Schaftes mit einer radialen Gruppe (48) von Borsten, welcher bis zur Umkehr durch die Umsteuerungsmittel dauernd in einer Richtung angetrieben wird, worin vorgesehen sind eine Kupplung (38, 44), die mit geminderter Drehzahl antreibbar ist, zwei austauschbare Schäfte (4, 6) mit je einer Kupplungsseite (50, 52, 66, 82) und einer Bürstenseite, wobei jede Kupplungsseite an die Kupplung (38, 44) angeschlossen werden kann, um den Antrieb auf die Bürstenseite zu übertragen, wobei die Brüstenseite eines Schafts mit der besagten radialen Gruppe (48) von Borsten versehen ist, bei bis zur Umkehr durch die Umsteuerung dauernd in einer Richtung angetrieben werden, und die Bürstenseite des anderen Schafts mit Respekt auf den Schaft (46), um eine in einem erheblichen Winkel zum Schaft angeordneten Achse drehbar ist, und Antriebsmittel (78, 76, 70) von der Kupplungsseite (66, 82) durch den Schaft (46) gehend, um die besagte Gruppe (74) in eine hin- und hergehende Bewegung zu versetzen, wobei eine Kombination von Reinigungsarten zur Verfügung steht, dadurch gekennzeichnet, daß das besagte andere Bürstenende eine nahezu parallel Borstengruppe besitzt, die parallel zu besagter Achse verläuft und daß die Drehzahlminderung aus einem durch den Motor (10) angetriebenen Getriebe (18) besteht, und dieses Getriebe ein Planetengetriebe mit einer Trägerplatte (42) ist, welche mit einer Drehzahl drehbar ist und einer Sonnenradachse (38), die bei jeder Motordrehzahl mit einer anderen Drehzahl läuft, und daß die besagte Kupplung (38, 44) eine wählbare, lösbare Antriebsverbindung zwischen besagter Trägerplatte und Sonnenradachse und der Kupplungsseite der besagten Schäfte herstellt.

2. Elektrisch angetriebene Zahnbürste nach Anspruch 1, worin die Kupplungsseite (50, 52) des Schaftes mit einer radialen Borstengruppe (48) für die treibende Verbindung mit besagter Trägerplatte (42) ausgelegt ist und die Kupplungsseite (66, 82) des Schafts mit einer nahezu parallelen Borstengruppe (74) für die treibende Verbindung mit besagter Sonnenradachse (38) ausgelegt ist.

3. Eine elektrisch angetriebene Zahnbürste nach einem der Ansprüche 1 oder 2, worin die Trägerplatte (42) eine mittlere keilverzahnte Öffnung und die koaxiale Sonnenradachse (38) ein keilverzahntes Ende hat, wobei die Kupplungsseite (50) eines der besagten Schäfte (46) eine röhrenförmige Büchse besitzt, deren Außenfläche zu den Keilnuten der Öffnung (44) komplementäre axiale Keilnuten (52) trägt und eine Aussparung (54) für die Aufnahme der Keilnutenseite der Achse (38), ohne jedoch die Achse zu berühren.

4. Eine elektrisch angetriebene Zahnbürste nach den Ansprüchen 1, 2 oder 3, worin der Handgriff (2) eine Aufnahme (8) für den Schaft enthält, die koaxial mit der Grundfläche des genannten Schaftes (46) liegt, und worin ein Schaft eine Lagerhülse (62) anschließend an die Kupplungsseite trägt, und die Außenfläche der Lagerhülse einen Schiebesitz in der Aufnahme hat.

5. Eine elektrisch angetriebene Zahnbürste nach Ansprüchen 1, 2, 3 oder 4, worin die Trägerplatte (42) eine zentrale mit Keilnuten versehene Öffnung und die koaxiale Sonnenradachse (38) ein mit Keilnuten versehenes Ende hat, die Kupplungsseite eines der besagten Schäfte (46) ein Rohr (66) ist, das einen Schiebesitz in einer am Handgriff angeordneten Aufnahme (8) hat und der Antrieb aus einer drehbar im Schaft gelagerten Antriebswelle (78) besteht, wobei am Ende der Antriebswelle eine Büchse (82) mit inneren Keilnuten aufweist, die komplementär zu den Keilnuten der Sonnenradachse (38) sind, während das andere Ende der Antriebswelle durch einen Mitnehmer und eine Nute (76, 72) mit der Gruppe (74) verbunden ist, um die hin- und hergehende Bewegung der Gruppe (74) zu erzeugen.

6. Eine elektrisch angetriebene Zahnbürste nach Anspruch 5, in welchem die Gruppe (74) in einem stumpfen Winkel zum Schaft auf einer Rolle (70) angeordnet ist, die in zwei Lagern (68) aufgenommen wird, wobei diese Rolle eine axiale Nute (72) besitzt, während die Antriebswelle (78) einen exzentrisch angeordneten Mitnehmerstift (76) hat, welcher in diese Nute eingreift.

7. Ein elektrisch angetriebene Zahnbürste nach einem der vorhergehenden Ansprüche, in welchem der Handgriff aus einem im wesentlichen röhrenförmigen hohlen Gehäuse (2) besteht, eine Aufnahmebüchse (8) für den Schaft auf einer Seite hervorsteht, die elektrischen Kabeleinführung (6) und die Bestandteile einer Umsteuerungsschaltkarte (26) auf der anderen Seite angeordnet sind, und der Motor (10) sowie die Drehzahluntersetzung (18) zwischen der Schaltkarte (26) und der Aufnahme (8) und ein Schalter (4) entlang dem Gehäuse angeordnet sind.

**Revendications**

1. Une brosse à dents à entraînement électrique qui comprend une partie manche stationnaire (2) qui porte un moteur électrique (10), un dispositif d'inversion de marche du moteur (26, 4, 30) et un mécanisme de réduction de vitesse (18), une tige (46) conçue pour s'étendre à partir du manche, et une tête à un bout de la tige qui comporte un système radial (48) de soies qui reçoit un entraînement rotatif continu jusqu'au moment où il est inversé par le dispositif d'inversion, et qui comporte un accouplement (38, 44) capable d'être entraîné à vitesse réduite, deux tiges interchangeables (4, 6), dont chacune comporte un bout accouplement (50, 52, 66, 82) et un bout brosse, chaque bout accouplement étant capable d'être connecté à l'accouplement (38, 44) pour transmettre l'entraînement uu bout brosse, le bout brosse d'une des tiges ayant un système radial (48) de soies comme dit ci-dessus qui reçoit un entraînement rotatif continu jusqu'à ce qu'il soit inversé par le dispositif d'inversion, le bout brosse de l'autre tige étant capable d'être tourné par rapport à la tige (46) autour d'un axe qui fait un angle important avec la tige, et un dispositif d'entraînement (78, 76, 70) entraîné à travers la tige (46) à partir du bout accouplement (66, 82) pour imposer un mouvement oscillant audit système (74) par lequel moyen une combinaison de méthodes de nettoyage est disponible, caractérisé par le fait que ledit deuxième bout brosse comporte une système de soies à peu près parallèles qui s'étend parallèlement audit axe, et que le mécanisme de réduction de vitesse est une boîte d'éngrenages (18) entraînée par le moteur (10), la boîte d'engrenages étant du type épicycloïdal avec une plaque porteuse (42) capable de tourner à un régime et un arbre d'engrenage soleil coaxial (38) qui tourne à un autre régime pour tout régime donné du moteur, et ledit accouplement (38, 44) prévoyant des connexions de transmission détachables au choix entre ladite plaque porteuse et l'arbre d'engrenage soleil et les bouts accouplement desdites tiges.

2. Une brosse à dents à entraînement électrique selon la revendication 1, où le bout entraînement (50, 52) de la tige qui a un système radial (48) de soies est conçu pour être connecté à ladite plaque porteuse (42) pour être entraîné par elle et le bout accouplement de la tige qui a un système a peu près parallèle (74) de soies est conçu pour être connecté audit arbre d'engrenage soleil (38) pour être entraîne par lui.

3. Une brosse à dents à entraînement électrique selon la revendication 1 ou 2, où la plaque porteuse (42) comporte une orifice central cannelé et l'arbre coaxial d'engrenage soleil (38) comporte un bout cannelé; le bout accouplement (50) d'une desdites tiges (46) ayant une douille tubulaire qui a une surface extérieure munie de cannelures axiales (52) qui s'accordent avec les cannelures de l'orifice (44) et une cavité (54) qui reçoit le bout cannelé de l'arbre (38) mais ne fait pas contact avec l'arbre.

4. Une brosse à dents à entraînement électrique selon la revendication 1, 2 ou 3, ou la partie manche (2) comporte une bague de support de tige (8) coaxiale avec la base de chacune des susdites tiges (46) et une tige comporte un manchon palier (62) situé près de son bout accouplement, la surface extérieure du manchon palier ayant un ajustage coulissant juste dans la bague.

5. Une brosse à dents à entraînement électrique selon la revendication 1, 2, 3 ou 4, où la plaque porteuse (42) comporte une orifice central cannelé et l'arbre coaxial d'engrenage soleil (38) comporte un bout cannelé; le bout accouplement d'une desdites tiges (46) est un tube (66) qui à un ajustage coulissant juste sur une bague (8) qui s'étend à partir de la partie manche, et le dispositif d'entraînement comprend un arbre de transmission (78) soutenu pour pouvoir tourner dans la tige, un bout dudit arbre de transmission comporte une douille (82) avec cannelures intérieures qui s'accordent avec les cannelures de l'arbre d'engrenage soleil (38) et l'autre bout dudit arbre de transmission comporte un raccord à goupille et fente (76, 72) avec le système (74) pour produire un mouvement oscillant du système (74).

6. Une brosse à dents à entraînement électrique selon la revendication 5, où le système (74) est disposé à angle obtus avec la tige et est monté sur un rouleau (70) supporté dans une paire de paliers (68), le rouleau ayant une fente axiale (72) tandis que l'arbre de transmission a une goupille (76) montée excentriquement qui s'engage dans la fente.

7. Une brosse à dents à entraînement électrique selon n'importe laquelle des revendications ci-dessus, où la partie manche comprend un boîtier creux à peu près tubulaire (2), une bague de support de tige (8) faisant saillie à un bout, des fils d'entrée d'alimentation électrique (6) et des composants qui constituent une carte de circuit de changement de vitesse (26) située au bout opposé, le moteur (10) et le mécanisme de réduction de vitesse (18) étant logés entre la carte de circuit (26) et la bague (8) et un ensemble d'interrupteur (4) situé le long du boîtier.

FIG.1

0 054 043

FIG.2

FIG.3

0 054 043

FIG. 4